(19) Europäisches Patentamt
European Patent Office
Office européen des brevets

(11) EP 4 656 666 A1

(12) EUROPEAN PATENT APPLICATION
published in accordance with Art. 153(4) EPC

(43) Date of publication:
03.12.2025 Bulletin 2025/49

(21) Application number: 24797452.0

(22) Date of filing: 26.04.2024

(51) International Patent Classification (IPC):
*C08G 63/91* *(2006.01)* *C08G 63/60* *(2006.01)*
*C08G 63/08* *(2006.01)* *C08G 63/78* *(2006.01)*

(52) Cooperative Patent Classification (CPC):
**C08G 63/08; C08G 63/60; C08G 63/78; C08G 63/91**

(86) International application number:
**PCT/KR2024/005650**

(87) International publication number:
**WO 2024/225798 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.04.2023 KR 20230055420**
**25.04.2024 KR 20240055649**

(71) Applicant: **LG CHEM, LTD.**
**Seoul 07336 (KR)**

(72) Inventors:
- **CHO, Suhyun**
**Daejeon 34122 (KR)**
- **LEE, Yeonju**
**Daejeon 34122 (KR)**
- **JEON, Harim**
**Daejeon 34122 (KR)**
- **KIM, Chul Woong**
**Daejeon 34122 (KR)**
- **PARK, Byung Hyun**
**Daejeon 34122 (KR)**

(74) Representative: **Hoffmann Eitle**
**Patent- und Rechtsanwälte PartmbB**
**Arabellastraße 30**
**81925 München (DE)**

# (54) POLY(LACTIC ACID-3-HYDROXYPROPIONIC ACID) COPOLYMER AND METHOD FOR PREPARING SAME

(57) The present disclosure relates to a poly(lactic acid-3-hydroxypropionic acid) copolymer including a novel network structure and a method for preparing the same.

EP 4 656 666 A1

## Description

### [TECHNICAL FIELD]

CROSS-REFERENCE TO RELATED APPLICATION(S)

This application claims priority from and the benefit of Korean Patent Application No. 10-2023-0055420 filed on April 27, 2023 and Korean Patent Application No. 10-2024-0055649 filed on April 25, 2024 in the Korean Intellectual Property Office, the disclosures of which are incorporated herein by reference in their entirety.

The present disclosure relates to a poly(lactic acid-3-hydroxypropionic acid) copolymer including a novel network structure and a method for preparing the same.

### [BACKGROUND]

Poly(3-hydroxypropionic acid) has a biodegradable characteristics, and owing to such eco-friendly characteristics, research on the use thereof has been actively conducted recently.

A method for preparing poly(3-hydroxypropionic acid) can be broadly classified into two types, wherein one is a method of performing polymerization using petrochemical based β-propiolactone(PL), and the other is a method of using bio-based 3-hydroxypropinic acid(3HP).

In the case of using PL, several synthesis steps must be carried out using ethylene oxide, which is disadvantageous in terms of economic efficiency as compared with the case of using 3HP.

In the case of polymerization using biosynthesis of 3HP, several steps such as freeze-drying, ultrasonication, and solvent extraction must be carried out to obtain poly(3-hydroxypropionic acid), and in this case, a large amount of solvent must be used. In the case of biosynthesis polymerized in this way, the bio content of poly(3-hydroxypropionic acid) is 100%, but due to the residue remaining after fermentation, it contains a large amount of organic nitrogen and has a high YI.

To solve the above problems, attempts have been made to perform a polycondensation of 3HP, but there are limitations in obtaining high molecular weight poly(3-hydroxypropionic acid) due to the byproduct in the form of cyclic oligomers. Attempts have been made to increase the molecular weight by subjecting a low molecular weight cyclic oligomer to a ROP(ring-opening polymerization), but there are difficulties in separation and purification.

Furthermore, a technology of synthesizing such a poly(3-hydroxypropionic acid) polymer so as to have a novel structure that realizes excellent physical properties for applying to a wider variety of product groups is required.

Therefore, there is a need to develop a method of preparing poly(3-hydroxypropionic acid) by polycondensation of 3HP, but preparing a polymer having a novel structure that realizes excellent physical properties and is easily applicable to a variety of product groups.

### [DETAILED DESCRIPTION OF THE INVENTION]

### [Technical Problem]

It is an object of the present disclosure to provide a poly(lactic acid-3-hydroxypropionic acid) copolymer having a novel network structure.

It is another object of the present disclosure to provide a method for preparing the poly(lactic acid-3-hydroxypropionic acid) copolymer.

### [Technical Solution]

Poly(lactic acid-3-hydroxypropionic acid) copolymer

In order to achieve the above object, according to an embodiment of the present disclosure, there is provided a poly(lactic acid-3-hydroxypropionic acid) copolymer comprising: a first repeating unit derived from a poly(3-hydroxypropionic acid) polymer having a network structure; and a second repeating unit derived from a lactide which is represented by the following Chemical Formula 2, wherein a plurality of 1-1 repeating units derived from 3-hydroxypropionic acid, which are represented by the following Chemical Formula 1, are contained within the first repeating unit, wherein the network structure is formed by bonding any one terminal group of the 1-1 repeating units to a terminal group of another 1-1 repeating unit by a reactive monomer, and wherein an alpha value measured by a multi-angle light scattering(MALS) detector is 0.4 to 0.8.

[Chemical Formula 1]

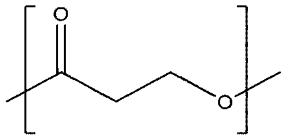

[Chemical Formula 2]

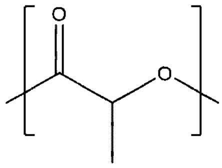

.

The term 'poly(lactic acid-3-hydroxypropionic acid) copolymer' as used herein includes a first repeating unit derived from 3-hydroxypropionic acid and a second repeating unit derived from a lactide, wherein a novel network structure including a 1-1 repeating unit represented by Chemical Formula 1 is contained within the first repeating unit.

The poly(lactic acid-3-hydroxypropionic acid) copolymer according to the present disclosure has biodegradable characteristics due to the molecular structure of the repeating units. The poly(lactic acid-3-hydroxypropionic acid) copolymer according to the present disclosure is characterized in that 3-hydroxypropionic acid is polymerized with a reactive monomer under specific conditions as described below, thereby preparing a polymer having a novel network structure, which is then polymerized with a lactide to thereby introduce a network structure in a final copolymer, which exhibits excellent physical properties.

The term "network structure" as used herein may mean containing at least two branched structures formed by bonding at least three or more repeating units to form a net structure, which is distinguished from a branched structure or a hyperbranched structure of multiple branches.

The poly(lactic acid-3-hydroxypropionic acid) copolymer having a novel network structure has appropriate molecular weight characteristics, and also can exhibit a high degree of crosslinking and appropriate elasticity at the same time. The copolymer usually has brittle characteristics that polymers with a high degree of crosslinking have, however, the copolymer having a novel network structure of the present disclosure supplements elasticity by an empty space in the network structure, and thus is reduced in brittle characteristics (brittleness), which makes it easy to apply to a variety of product groups.

Specifically, the poly(lactic acid-3-hydroxypropionic acid) copolymer according to an embodiment of the disclosure has a structure that contains a plurality of 1-1 repeating units derived from 3-hydroxypropionic acid, which are represented by Chemical Formula 1, within the first repeating unit. Any one terminal group of the 1-1 repeating units is bonded to a terminal group of another 1-1 repeating unit by a reactive monomer to form a new network structure, and a second repeating unit derived from a lactide is copolymerized in the network structure to form the final copolymer.

The alpha value of the poly(lactic acid-3-hydroxypropionic acid) copolymer as measured by a multi-angle light scattering(MALS) detector is 0.4 to 0.8, preferably 0.4 to 0.7. The desired network structure can be achieved by satisfying the above range.

Accordingly, the present disclosure can be produced into various molded products, and especially, even when produced in a foam shape, the net structure supports the foam so that the shape is maintained without collapsing even after final processing.

The alpha value measured by a multi-angle light scattering(MALS) detector is an index capable of grasping the structure of a polymer, and the alpha value means the constant value of the Mark-Houwink equation derived according to the multi-angle light scattering(MALS) detector. If the alpha value approaches 1 outside the above range, it means that the structure of the polymer is approaching linearity, which is not suitable. Furthermore, if the alpha value in the crosslinked structure is too low outside the above range, gelation occurs, which reduces processability and mechanical properties, so that the shape of the final polymer is hardly maintained in a foam shape, which makes it difficult to apply to a variety of product groups. The specific measurement method thereof will be described in more detail in Experimental Examples provided hereinafter.

A poly(lactic acid-3-hydroxypropionic acid) copolymer according to an embodiment of the present disclosure contains a first repeating unit derived from a poly(3-hydroxypropionic acid) polymer.

A plurality of 1-1 repeating units derived from 3-hydroxypropionic acid, which are represented by the following Chemical Formula 1, are contained within the first repeating unit, and any one terminal group of the 1-1 repeating units is bonded to a terminal group of another 1-1 repeating unit by a reactive monomer, thereby forming a network structure.

[Chemical Formula 1]

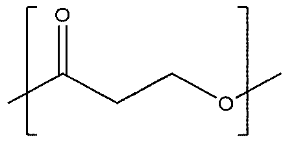

Herein, the "terminal group of the 1-1 repeating unit" means a terminal group derived by the reaction between 3-hydroxypropionic acid, which is a unit monomer forming the repeating unit, and a reactive monomer.

The reactive monomer may include at least one terminal reactive substituent selected from the group consisting of a hydroxyl group(-OH), a carboxyl group(-COOH), an amino group($-NH_2$), a cyano group(-CN), a thiol group(-SH), and an isocyanate group(-N=C=O). Preferably, the reactive monomer may be a polyfunctional monomer including a plurality of terminal reactive substituents, and thus is easy to form a novel network structure.

The reactive monomer may be at least one selected from among poly$C_{1-60}$ alkylene polyol or $C_{1-60}$ alkyl dicarboxylic acid, and poly$C_{1-60}$ alkylene polyol or $C_{1-60}$ alkyl dicarboxylic acid may be used simultaneously.

Herein, the poly$C_{1-60}$ alkylene polyol may include at least one selected from the group consisting of glycerol, 3-arm-poly(ethylene glycol)$_{n=2\sim15}$, 4-arm-poly(ethylene glycol)$_{n=2\sim10}$, erythritol, pentaerythritol, di(trierythritolpropane), xylitol, sorbitol, tripentaerythritol, inositol and β-cyclodextrin, and preferably, may include glycerol, but is not limited thereto.

Furthermore, the $C_{1-60}$ alkyl dicarboxylic acid may include at least one selected from the group consisting of malonic acid, succinic acid, adipic acid, 1,3,5-benzenetricarboxylic acid, 1,3,5-triazine-2,4,6-tricarboxylic acid, citric acid, and 2,2-bis(hydroxymethyl)butyric acid, and preferably, may include succinic acid, but is not limited thereto.

According to an embodiment of the disclosure, a poly(lactic acid-3-hydroxypropionic acid) copolymer includes a second repeating unit derived from a lactide, which is represented by the following Chemical Formula 2.

[Chemical Formula 2]

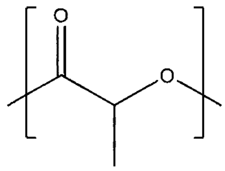

The 'lactide' refers to L-lactide, D-lactide, meso-lactide consisting of an L-type and a D-type, or D,L-lactide or rac-lactide in which L-lactide and D-lactide are mixed in a weight ratio of 50:50.

According to an embodiment of the disclosure, the poly(lactic acid-3-hydroxypropionic acid) copolymer having a novel network structure may have the following structure, but is not limited thereto.

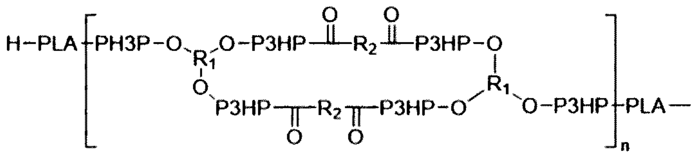

wherein, $R_1$ and $R_2$ may mean a structure derived from a reactive monomer.
n may be 1 to 100.

Preferably, the weight average molecular weight(Mw) of the poly(lactic acid-3-hydroxypropionic acid) copolymer is 100,000 to 500,000. More preferably, the weight average molecular weight is 120,000 or more, 150,000 or more, 170,000 or more, or 200,000 or more, and 450,000 or less, 400,000 or less, 380,000 or less, 350,000 or less, or 300,000 or less.

Preferably, the number average molecular weight(Mn) of the poly(lactic acid-3-hydroxypropionic acid) copolymer is 10,000 to 250,000. More preferably, the number average molecular weight is 15,000 or more, 18,000 or more, 20,000 or more, 25,000 or more, or 30,000 or more, and 200,000 or less, 150,000 or less, 100,000 or less, 90,000 or less, 70,000 or less, 50,000 or less, or 45,000 or less.

Preferably, the polydispersity index(PDI) of the poly(lactic acid-3-hydroxypropionic acid) copolymer is 2.0 to 7.0. More preferably, the polydispersity index is 2.1 or more, 2.3 or more, 2.5 or more, 2.8 or more, or 3.2 or more, and 6.8 or less, 6.3 or less, 6.0 or less, 5.5 or less, or 5.0 or less.

Preferably, the crystallization temperature(Tc) of the poly(lactic acid-3-hydroxypropionic acid) copolymer is 90 to

120°C, preferably 95°C to 118°C. By satisfying the above thermal characteristics, it is advantageous to achieve the desired effect. Furthermore, the crystallization temperature(Tc) of the poly(lactic acid-3-hydroxypropionic acid) copolymer is 90 to 120°C, and the total enthalpy($\Delta H$) in the region is 20 to 40 J/g, more preferably, 29 to 39 J/g. The crystallization temperature and its enthalpy can be measured by DSC (differential scanning calorimetry), and the specific measurement method thereof will be described in more detail in Experimental Examples provided hereinafter.

Preferably, the melting temperature(Tm) of the poly(lactic acid-3-hydroxypropionic acid) copolymer is 160 to 170°C, more preferably 165 to 168°C. By satisfying the above thermal characteristics, it is advantageous to achieve the desired effect. The specific measurement method thereof will be described in more detail in Experimental Examples provided hereinafter.

Method for preparing poly(lactic acid-3-hydroxypropionic acid) polymer

On the other hand, according to an embodiment of the present disclosure, a method for preparing the above-mentioned poly(lactic acid-3-hydroxypropionic acid) polymer is provided, which can be prepared from 3-hydroxypropionic acid and lactide, wherein 3-hydroxypropionic acid can be prepared through biosynthesis.

Therefore, preferably, the poly(lactic acid-3-hydroxypropionic acid) prepared according to the present disclosure can have a bio content of 90% or more. The bio content can be determined by graphitizing a sample to be measured and then analyzing the content of radioactive isotope 14C (bio-derived) by ASTM D6866-22.

More specifically, the method for preparing a poly(lactic acid-3-hydroxypropionic acid) polymer comprises a first step of polymerizing 3-hydroxypropionic acid and a reactive monomer to form an oligomer; a second step of polymerizing the oligomer to prepare a poly(3-hydroxypropionic acid) polymer having a network structure; and a third step of subjecting the poly(3-hydroxypropionic acid) polymer and lactide to a ring-opening polymerization to prepare a poly(lactic acid-3-hydroxypropionic acid) copolymer.

At this time, by adjusting the preparation conditions of the steps 1 and 2, a poly(3-hydroxypropionate) polymer having a network structure can be prepared, in which the final copolymer is prepared by ring-opening polymerization of a lactide. The details of the 3-hydroxypropionic acid, reactive monomer, and lactide used herein can be similarly applied to the contents set forth above.

(Step 1)

The step 1 of the present disclosure is a step of subjecting 3-hydroxypropionic acid and a reactive polymer to melt polymerization to prepare an oligomer. The melt polymerization means that the 3-hydroxypropionic acid and reactive polymer as reactants and the oligomer as a product maintains a liquid state.

The reactive monomer performs the function to bond a plurality of repeating units formed by 3-hydroxypropionic acid so that the polymer can form a new network.

The reactive monomer may include at least one terminal reactive substituent selected from the group consisting of a hydroxyl group(-OH), a carboxyl group(-COOH), an amino group($-NH_2$), a cyano group(-CN), a thiol group(-SH), and an isocyanate group(-N=C=O). Preferably, the reactive monomer may be a polyfunctional monomer including a plurality of terminal reactive substituents, which makes it easy to form a novel network structure. The specific types of the reactive monomer may be similarly applied to all the contents set forth above.

Preferably, the reactive monomer may include at least one selected from among poly$C_{1-60}$ alkylene polyol or $C_{1-60}$ alkyl dicarboxylic acid, and preferably, may include both poly$C_{1-60}$ alkylene polyol and $C_{1-60}$ alkyl dicarboxylic acid. The specific types of the poly$C_{1-60}$ alkylene polyol and $C_{1-60}$ alkyl dicarboxylic acid may be similarly applied to all the contents set forth above.

The poly$C_{1-60}$ alkylene polyol may be contained in an amount of 0.1 to 15 mol%, preferably 0.5 to 10 mol%, relative to 100 mol of 3-hydroxypropionic acid. Furthermore, the $C_{1-60}$ alkyl dicarboxylic acid may be contained in an amount of 0.01 to 5 mol% , preferably 0.25 to 5 mol%, relative to 100 mol of 3-hydroxypropionic acid. By using each reactive monomer within the above content range, a novel network structure can be easily formed.

The step 1 adjusts the reaction temperature to a temperature of 80°C to 100°C. Preferably, the reaction temperature of the step 1 is 81°C or more, 82°C or more, 83°C or more, 84°C or more, or 85°C or more, and 99°C or less, 98°C or less, 97°C or less, 96°C or less, or 95°C or less.

Furthermore, the step 1 is carried out under a pressure of 5 torr to 20 torr. Preferably, the pressure of the step 1 is 6 torr or more, 7 torr or more, 8 torr or more, or 9 torr or more, and 19 torr or less, 18 torr or less, 17 torr or less, 16 torr or less, or 15 torr or less.

Furthermore, the reaction time of the step 1 can be appropriately determined in consideration of the molecular weight, yield, and the like of the prepared oligomer, and the reaction is preferably carried out for 1 to 3 hours.

Preferably, the step 1 is carried out in the presence of a sulfonic acid-based catalyst. Preferably, the sulfonic acid-based catalyst is p-toluenesulfonic acid, m-xylene-4-sulfonic acid, 2-mesitylenesulfonic acid, or p-xylene-2-sulfonic acid.

The catalyst is used in an amount of 0.1 to 0.5 mol% relative to 3-hydroxypropionic acid.

(Step 2)

The step 2 of the present disclosure is a step of further polymerizing the oligomer of the step 1 to prepare a poly(3-hydroxypropionate) polymer having a novel network structure.

Through the steps, a first repeating unit derived from a poly(3-hydroxypropionate) polymer is formed, wherein a plurality of 1-1 repeating units derived from 3-hydroxypropionate, which are represented by the following Chemical Formula 1 are contained within the first repeating unit.

[Chemical Formula 1]

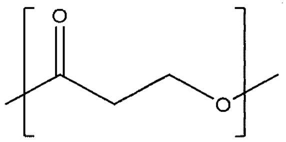

The reactive monomer performs the function to bind a plurality of 1-1 repeating units formed by 3-hydroxypropionic acid so that the polymer can form a new network.

Unlike step 1, the step 2 can be carried out under a lower pressure because the reactant is an oligomer.

Preferably, the reaction temperature of the step 2 is 75°C to 95°C. More preferably, the reaction temperature of the step 2 is 80°C or more, or 85°C or more, and 94°C or less, 93°C or less, 92°C or less, or 91°C or less.

Preferably, the reaction pressure of the step 2 is 5 torr or less. More preferably, the pressure of the step 2 is 4 torr or less, 3 torr or less, 2 torr or less, 1 torr or less, 0.5 torr or less, 0.4 torr or less, or 0.3 torr or less, and 0.01 torr or more, 0.02 torr or more, 0.03 torr or more, 0.04 torr or more, 0.05 torr or more, 0.06 torr or more, 0.07 torr or more, 0.08 torr or more, 0.09 torr or more, or 0.1 torr or more.

Furthermore, the reaction time of the step 2 can be appropriately determined in consideration of the molecular weight, yield, and the like of the prepared poly(3-hydroxypropionate) polymer, and the reaction is preferably carried out for 5 to 30 hours.

Preferably, the steps 1 and 2 are carried out for a total of 7 hours to 30 hours, more preferably 7 hours to 24 hours.

Meanwhile, since the step 2 is carried out subsequent to the step 1, the catalyst added in the step 1 also participates in the reaction in the step 2. Therefore, the catalyst described in the previous step 1 above can be applied even in the step 2.

Furthermore, according to an embodiment of the disclosure, the second step may be carried out by further adding a tin-based catalyst. Preferably, the tin-based catalyst is $SnCl_2$ or $Sn(oct)_2$. The catalyst is used in an amount of 0.001 to 0.5 mol% relative to 3-hydroxypropionic acid.

(Step 3)

Next, the method includes a third step of subjecting the poly(3-hydroxypropionic acid) polymer and lactide to a ring-opening polymerization to prepare a poly(lactic acid-3-hydroxypropionic acid) copolymer.

Through the step, a second repeating unit derived from a lactide, which is represented by the following Chemical Formula 2, is formed:

[Chemical Formula 2]

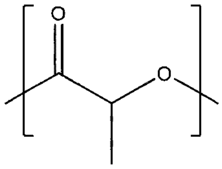

The lactide can be mixed in an amount of 100 to 1,000 parts by weight relative to 100 parts by weight of the poly(lactic acid-3-hydroxypropionic acid) copolymer, and preferably, it can be included in an amount of 300 to 1,000 parts by weight, or 500 to 900 parts by weight. When the ring-opening reaction is carried out by mixing within the above range, a novel copolymer having a network structure and excellent physical properties can be prepared in a desired molecular weight range, which is preferable.

The step 3 adjusts the reaction temperature to a temperature of 100°C to 250°C. Preferably, the reaction

temperature of the step 3 is 150°C or more, 160°C or more, 170°C or more, or 180°C or more, and 240°C or less, 230°C or less, 220°C or less, 210°C or less, or 200°C or less.

Furthermore, the step 3 is carried out under a normal pressure (about 760 torr).

Furthermore, the reaction time of the step 3 can be appropriately determined in consideration of the molecular weight, yield, and the like of the final copolymer produced, and the reaction is preferably carried out for 1 hour to 3 hours.

Preferably, the step 3 can be carried out by further adding a tin-based catalyst. Preferably, the tin-based catalyst is $SnCl_2$ or $Sn(oct)_2$. The catalyst is used in an amount of 0.001 to 0.5 mol% relative to a lactide.

Meanwhile, before steps 1, 2 and 3, the 3-hydroxypropionic acid, reactive monomer and lactide can be pretreated independently at 30°C to 100°C and 30 mbar to 150 mbar, if necessary. Through the pretreatment step, moisture present in the 3-hydroxypropionic acid, reactive monomer, and lactide can be removed.

The poly(lactic acid-3-hydroxypropionic acid) polymer having a novel network structure prepared by the above-mentioned method has appropriate molecular weight characteristics, and can exhibit a high degree of crosslinking, and appropriate elasticity at the same time. The copolymer usually has brittle characteristics that polymers with a high degree of crosslinking have, however, the copolymer having a novel network structure of the present disclosure supplements elasticity by an empty space in the network structure, and thus is reduced in brittle characteristics (brittleness), which makes it easy to apply to a variety of product groups.

**[Advantageous Effects]**

As described above, the present disclosure can effectively prepare a poly(lactic acid-3-hydroxypropionic acid) copolymer having a novel network structure and excellent physical properties.

**[DETAILED DESCRIPTION OF THE EMBODIMENTS]**

Hereinafter, the present disclosure will be described in more detail by way of examples. However, the following examples are for illustrative purposes only, and the contents of the present disclosure is not limited thereby.

**[Example and Comparative Example]**

**Example 1**

(Step 1)

3-Hydroxypropionic acid (70 g) from which moisture has been removed, 7.156 g of reactive monomer glycerol (10 mol% relative to 3-HP), and 4.59 g of succinic acid (5 mol% relative to 3-HP) were placed in a reactor, and 295.6 mg of p-TSA (p-toluenesulfonic acid) (0.2 mol% relative to 3-HP) as a catalyst was added thereto. The temperature and pressure in the reactor were maintained at 90°C and 10 mbar(7.5 torr), respectively, and the reaction was carried out for 2 hours to prepare an oligomer.

(Step 2)

Then, the temperature and pressure in the reactor were adjusted to 80°C and 0.1 torr, respectively, and 157.4 mg of $SnOct_2$ (0.05 mol% relative to 3-HP) as an additional catalyst was added thereto, and the reaction was further carried out for 5 hours to prepare a poly(3-hydroxypropionic acid) polymer.

(Step 3)

Next, 4 g of the poly(3-hydroxypropionic acid) polymer was mixed with 40 g of lactide in a new reactor, and moisture was dried at room temperature for 12 hours. 180 ul of a 0.01M $Sn(Oct)_2$ solution in toluene (0.03 mol% relative to lactide) was injected into the reactor, and the toluene was vacuum dried for 30 minutes. Next, the reactor was filled with nitrogen, and the reaction was carried out for 90 minutes in an oil bath preheated to 180°C. Thereby a product containing a poly(lactic acid-3-hydroxypropionic acid) copolymer having a novel network structure was obtained. To remove residual lactide in the product, devolatilization was carried out at 140°C for 4 hours to prepare a final copolymer.

**Examples 2 to 4**

A poly(lactic acid-3-hydroxypropionic acid) copolymer was prepared in the same manner as in Example 1, except that the reaction conditions were changed as shown in Table 1 below.

**Comparative Example 1**

(Step 1)

3-hydroxypropionic acid(60 g) from which moisture has been removed was placed in a reactor, and 253.4 mg of p-TSA (p-toluenesulfonic acid) (0.2 mol% relative to 3-HP) as a catalyst was added thereto. The temperature and pressure in the reactor were maintained at 90°C and 10 mbar(7.5 torr), respectively, and the reaction was carried out for 2 hours to prepare a 3-hydroxypropionic acid oligomer.

(Step 2)

Then, the temperature and pressure in the reactor were adjusted to 80°C and 0.1 torr, respectively, and the reaction was carried out for 5 hours to prepare a linear poly(3-hydroxypropionate) polymer.

(Step 3)

Next, 4 g of the poly(3-hydroxypropionic acid) polymer was mixed with 40 g of lactide in a new reactor, and moisture was dried at room temperature for 12 hours. 180 ul of 0.01M $Sn(Oct)_2$ solution in toluene (0.03 mol% relative to lactide) was injected into the reactor, and the toluene was vacuum dried for 30 minutes. Next, the reactor was filled with nitrogen, and the reaction was carried out for 90 minutes in an oil bath preheated to 180°C. Thereby, a product containing a poly(lactic acid-3-hydroxypropionic acid) copolymer was obtained. To remove residual lactide in the product, devolatilization was carried out at 140°C for 4 hours to prepare a final copolymer.

**Comparative Example 2**

(Step 1)

70 g of 3-hydroxypropionic acid (3HP) whose moisture has been dried and 3.578 g of glycerol (5 mol% relative to 3HP) were placed in a reactor, and oligomerization reaction was carried out using 295.6 mg of p-TSA (0.2 mol% relative to 3HP) as a catalyst while maintaining at 90°C and 10 mbar(7.5 torr) for 2 hours.

(Step 2)

Then, the temperature and pressure in the reactor were adjusted to 80°C and 0.1 torr, respectively, 157.4 mg of $Sn(Oct)_2$ (0.05 mol% relative to 3HP) as a cocatalyst was added thereto, and the reaction was carried out for an additional 5 hours to prepare a branched polymer.

(Step 3)

Next, 4 g of the branched type was mixed with 40 g of lactide in a new reactor, and moisture was dried at room temperature for 12 hours. 180 ul of a 0.01M $Sn(Oct)_2$ solution in toluene (0.03 mol% relative to lactide) was injected into the reactor, and the toluene was vacuum dried for 30 minutes. Next, the reactor was filled with nitrogen, and the reaction was carried out for 90 minutes in an oil bath preheated to 180°C. Thereby, a product containing a poly(lactic acid-3-hydroxypropionic acid) copolymer having a novel network structure was obtained. To remove residual lactide in the product, devolatilization was carried out at 140°C for 4 hours to prepare a final copolymer.

[Table 1]

| Category | Reactive monomer (content relative to 3-HP) | |
|---|---|---|
| | A(mol%) | B(mol%) |
| Example 1 | 10 | 5 |
| Example 2 | 5 | 2.5 |
| Example 3 | 1 | 0.5 |
| Example 4 | 0.5 | 0.25 |
| Comparative Example 1 | - | - |
| Comparative Example 2 | 5 | - |

(continued)

| Category | Reactive monomer (content relative to 3-HP) | |
|---|---|---|
| | A(mol%) | B(mol%) |
| Type of reactive monomer<br>A: Glycerol<br>B: Succinic acid | | |

**[Experimental Example]**

(1) Evaluation of molecular weight characteristics

The weight average molecular weight, water average molecular weight, and polydispersity index of the copolymer for each step prepared in Examples and Comparative Examples were measured by a gel permeation chromatography(GPC, Waters Alliance e2695), and the results are shown in Table 2 below.
- Solvent: chloroform (eluent)
- Flow rate: 1.0 ml/min
- Column temperature: 40°C
- Standard: Polystyrene

[Table 2]

| Category | Evaluation of molecular weight characteristics | | |
|---|---|---|---|
| | Mn | Mw | PDI |
| Example 1 | 37,403 | 201,936 | 5.39 |
| Example 2 | 68,880 | 167,649 | 2.43 |
| Example 3 | 61,659 | 313,172 | 5.08 |
| Example 4 | 66,855 | 162,204 | 2.41 |
| Comparative Example 1 | 66,263 | 168,136 | 2.54 |
| Comparative Example 2 | 51,728 | 226,840 | 5.16 |

(2) Evaluation of alpha value by multi-angle light scattering(MALS) detector

The alpha values of the copolymers prepared in Examples and Comparative Examples were measured using a multi-angle optical scattering(MALS) detector, and the results are shown in Table 1 below.

First, the copolymer was dissolved in chloroform (stabilized with ETOH) at a concentration of 5 mg/mL to prepare a sample, and the mobile phase was prepared by filtering 1000 mL of chloroform (stabilized with ETOH) through a solvent clarification system. The radius of gyration(Rg) of the solvated chain of the polymer was measured using a multi-angle light scattering(MALS) detector, and a plot of intrinsic viscosity($\eta$) and absolute molecular weight(M; absolute MW) was derived therefrom. The constant Alpha($\alpha$) value was calculated using the Mark-Houwink equation of the following Mathematical Equation 1, and the results are shown in Table 3 below.
- RI(refractive index) measurement: DAWN8 (manufacturer: Wyatt)
- Visocmeter(viscosity) measurement: Viscostar III (manufacturer: Wyatt)
- Light scattering measurement: Optilab T-rEX (manufacturer: Wyatt)
- Stationary phase: 2x Agilent PLgel MIXED-B and C, 7.5 x 300 mm, 5 $\mu$m
- Mobile phase: chloroform (stabilized with ETOH) = 100 (v/v, %)
- Flow rate: 1.0 mL/min
- Stationary phase temperature: 40 °C
- Injection volume: 100 $\mu\ell$ (0.45 $\mu$m filtered)
- Analysis time: 35 min
- System calibration: polystyrene (Mp:135700)
- Chloroform refractive index: 1.45

[Mathematical Equation 1]

$$\log[\eta] = \alpha\log M + \log K$$

in Mathematical Equation 1,
[η] is the intrinsic viscosity (dℓ/g) of the copolymer,
M is the absolute molecular weight (absolute MW) of the copolymer,
and K is a constant.

[Table 3]

| Category | Alpha |
|---|---|
| Example 1 | 0.4 |
| Example 2 | 0.4 |
| Example 3 | 0.7 |
| Example 4 | 0.5 |
| Comparative Example 1 | 1.1 |

(3) Evaluation of DSC(differential scanning calorimetry) thermal characteristics

The thermal characteristics(Tg, Tm, cold crystallization (2nd heating result), Tc (1st cooling result), total enthalpy(ΔH)) of the copolymers prepared in Examples and Comparative Examples were measured using a TA DSC250 model device under nitrogen gas flow conditions, and the results are shown in Table 2 below.
Heating at 5°C/min from 40°C to 190°C (1st heating)/maintaining at temperature of 190°C for 10 minutes
Cooling at 5°C/min from 190°C to -60°C (1st cooling)/maintaining at a temperature of -60°C for 10 minutes
Heating at 5°C/min from -60°C to 190°C (2nd heating)

[Table 4]

| Category | Tc | | Tg | Cold crystallization | | Tm | |
|---|---|---|---|---|---|---|---|
| | Temperature (°C) | ΔH (J/g) | Temperature (°C) | Temperature (°C) | ΔH (J/g) | Temperature (°C) | ΔH (J/g) |
| Example 2 | 115.18 | 38 | 43.05 | N.D. | N.D. | 169.51 | 39.85 |
| Example 3 | 112.11 | 37.91 | 52.88 | N.D | N.D | 168.7 | 41.58 |
| Example 4 | 95.46 | 29.03 | 50.63 | N.D | N.D | 168.7 | 41.58 |
| Comparative Example 2 | 91.17 | 5.62 | 49.1 | 105.4 | 24.17 | 159.7 | 33.7 |

Generally, if the crystallization speed is fast, the enthalpy of Tc is large, and cold crystallization is small or absent, and further, as the degree of crystallinity is higher, the enthalpy of Tm may be larger. In addition, it can be confirmed that, when the degree of crystallinity is high, the strength of the material increases, but it is brittle and has no elasticity, however, in the case of a novel network structure as in the present disclosure, the degree of crystallinity can be lowered to thereby reduce the brittle characteristics. In the case of Comparative Example 2, it can be confirmed that the enthalpy of Tc is significantly lower than in Examples, and cold crystallization occurs. Through this, it was confirmed that the speed of crystal formation is slower than in Examples. In addition, it was confirmed that the degree of crystallinity is lower than in Examples through the enthalpy value of Tm.

## Claims

**1.** A poly(lactic acid-3-hydroxypropionic acid) copolymer comprising:

a first repeating unit derived from a poly(3-hydroxypropionic acid) polymer having a network structure; and a

second repeating unit derived from a lactide which is represented by the following Chemical Formula 2, wherein a plurality of 1-1 repeating units derived from 3-hydroxypropionic acid, which are represented by the following Chemical Formula 1, are contained within the first repeating unit,
wherein the network structure is formed by bonding any one terminal group of the 1-1 repeating units to a terminal group of another 1-1 repeating unit by a reactive monomer, and
wherein an alpha value measured by a multi-angle light scattering(MALS) detector is 0.4 to 0.8.

[Chemical Formula 1]

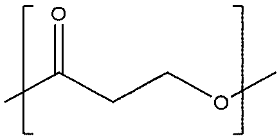

[Chemical Formula 2]

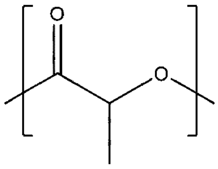

.

2. The poly(lactic acid-3-hydroxypropionic acid) copolymer according to claim 1, wherein:
the network structure includes at least two branched structures formed by bonding at least three or more 1-1 repeating units.

3. The poly(lactic acid-3-hydroxypropionic acid) copolymer according to claim 1, wherein:
the reactive monomer includes at least one terminal reactive substituent selected from the group consisting of a hydroxyl group(-OH), a carboxyl group(-COOH), an amino group($-NH_2$), a cyano group(-CN), a thiol group(-SH), and an isocyanate group(-N=C=O).

4. The poly(lactic acid-3-hydroxypropionic acid) copolymer according to claim 1, wherein:
the reactive monomer is at least one selected from among poly$C_{1-60}$ alkylene polyol or $C_{1-60}$ alkyl dicarboxylic acid.

5. The poly(lactic acid-3-hydroxypropionic acid) copolymer according to claim 4, wherein:
the poly$C_{1-60}$ alkylene polyol is at least one selected from the group consisting of glycerol, 3-arm-poly(ethylene glycol)$_{n=2\sim15}$, 4-arm-poly(ethylene glycol)$_{n=2\sim10}$, erythritol, pentaerythritol, di(trierythritolpropane), xylitol, sorbitol, tripentaerythritol, inositol and β-cyclodextrin.

6. The poly(lactic acid-3-hydroxypropionic acid) copolymer according to claim 4, wherein:
the $C_{1-60}$ alkyl dicarboxylic acid is at least one selected from the group consisting of malonic acid, succinic acid, adipic acid, 1,3,5-benzenetricarboxylic acid, 1,3,5-triazine-2,4,6-tricarboxylic acid, citric acid, and 2,2-bis(hydroxymethyl) butyric acid.

7. The poly(lactic acid-3-hydroxypropionic acid) copolymer according to claim 1, wherein:
a weight average molecular weight(Mw) of the copolymer is 100,000 to 500,000.

8. The poly(lactic acid-3-hydroxypropionic acid) copolymer according to claim 1, wherein:
a number average molecular weight(Mn) of the copolymer is 10,000 to 250,000.

9. The poly(lactic acid-3-hydroxypropionic acid) copolymer according to claim 1, wherein:
a polydispersity index(PDI) of the copolymer is 2.0 to 7.0.

10. The poly(lactic acid-3-hydroxypropionic acid) copolymer according to claim 1, wherein:
a crystallization temperature(Tc) of the copolymer is 90 to 120°C, and a total enthalpy (ΔH) in the region is 20 to 40 J/g.

**11.** The poly(lactic acid-3-hydroxypropionic acid) copolymer according to claim 1, wherein: a melting temperature(Tm) of the copolymer is 160 to 170°C.

**12.** A method for preparing the poly(lactic acid-3-hydroxypropionic acid) copolymer as set forth in claim 1, the method comprising:

a first step of polymerizing 3-hydroxypropionic acid and a reactive monomer to form an oligomer;
a second step of polymerizing the oligomer to prepare a poly(3-hydroxypropionic acid) polymer having a network structure; and
a third step of subjecting the poly(3-hydroxypropionic acid) polymer and lactide to a ring-opening polymerization to prepare a poly(lactic acid-3-hydroxypropionic acid) copolymer.

**13.** The method for preparing the poly(lactic acid-3-hydroxypropionic acid) copolymer according to claim 12, wherein: the reactive monomer includes at least one terminal reactive substituent selected from the group consisting of a hydroxyl group(-OH), a carboxyl group(-COOH), an amino group($-NH_2$), a cyano group(-CN), a thiol group(-SH), and an isocyanate group(-N=C=O).

**14.** The method for preparing the poly(lactic acid-3-hydroxypropionic acid) copolymer according to claim 12, wherein: the reactive monomer is at least one selected from among poly$C_{1-60}$ alkylene polyol or $C_{1-60}$ alkyl dicarboxylic acid.

**15.** The method for preparing the poly(lactic acid-3-hydroxypropionic acid) copolymer according to claim 14, wherein:

the poly$C_{1-60}$ alkylene polyol is contained in an amount of 0.1 to 15 mol% relative to 100 mol of 3-hydroxypropionic acid, and
the $C_{1-60}$ alkyl dicarboxylic acid is contained in an amount of 0.01 to 5 mol% relative to 100 mol of 3-hydroxypropionic acid.

**INTERNATIONAL SEARCH REPORT**

International application No. **PCT/KR2024/005650**

**A. CLASSIFICATION OF SUBJECT MATTER**

**C08G 63/91**(2006.01)i; **C08G 63/60**(2006.01)i; **C08G 63/08**(2006.01)i; **C08G 63/78**(2006.01)i

According to International Patent Classification (IPC) or to both national classification and IPC

**B. FIELDS SEARCHED**

Minimum documentation searched (classification system followed by classification symbols)

C08G 63/91(2006.01); B32B 27/36(2006.01); C08G 63/06(2006.01); C08G 63/08(2006.01); C08G 63/60(2006.01); C08G 63/78(2006.01); C08G 77/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 3-하이드록시프로피온산(3-hydroxypropionic acid), 락타이드(lactide), 말단기(terminal group), 반응성 단량체(reactive monomer), 폴리올(polyol), 디카르복시산(dicarboxylic acid), 네트워크(network)

**C. DOCUMENTS CONSIDERED TO BE RELEVANT**

| Category* | Citation of document, with indication, where appropriate, of the relevant passages | Relevant to claim No. |
|---|---|---|
| Y | WO 2022-235113 A1 (LG CHEM, LTD.) 10 November 2022 (2022-11-10) See paragraphs [0196]-[0211], [0228] and [0235]; and claims 1-18. | 1-15 |
| Y | US 2012-0027973 A1 (WAUTIER, H.) 02 February 2012 (2012-02-02) See paragraphs [0017], [0018], [0068], [0069], [0102], [0103], [0115] and [0116]; and claims 1 and 4-6. | 1-15 |
| Y | WO 2016-173640 A1 (SOLVAY SA) 03 November 2016 (2016-11-03) See paragraphs [0058] and [0062]; and claims 1-15. | 1-15 |
| Y | WO 2022-235112 A1 (LG CHEM, LTD.) 10 November 2022 (2022-11-10) See paragraphs [0144]-[0150], [0161]-[0175], [0193] and [0200]; and claims 1-16. | 1-15 |
| A | KR 10-2023-0020930 A (LG CHEM, LTD.) 13 February 2023 (2023-02-13) See entire document. | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 July 2024** | **22 July 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2024/005650

C. DOCUMENTS CONSIDERED TO BE RELEVANT

| Category* | Citation of document, with indication, where appropriate, of the relevant passages | Relevant to claim No. |
|---|---|---|
| A | KR 10-2021-0038251 A (LG CHEM, LTD.) 07 April 2021 (2021-04-07)<br>See entire document. | 1-15 |

Form PCT/ISA/210 (second sheet) (July 2022)

**INTERNATIONAL SEARCH REPORT**
**Information on patent family members**

International application No.
**PCT/KR2024/005650**

| Patent document cited in search report | Publication date (day/month/year) | Patent family member(s) | Publication date (day/month/year) |
|---|---|---|---|
| WO 2022-235113 A1 | 10 November 2022 | CN 117242114 A | 15 December 2023 |
| | | EP 4317245 A1 | 07 February 2024 |
| | | JP 2024-518053 A | 24 April 2024 |
| | | KR 10-2022-0151567 A | 15 November 2022 |
| | | US 2024-0076441 A1 | 07 March 2024 |
| US 2012-0027973 A1 | 02 February 2012 | CA 2757239 A1 | 07 October 2010 |
| | | CA 2757239 C | 09 May 2017 |
| | | CN 102414244 A | 11 April 2012 |
| | | CN 102414244 B | 01 April 2015 |
| | | CN 104725623 A | 24 June 2015 |
| | | CN 104725623 B | 12 April 2017 |
| | | EP 2414428 A1 | 08 February 2012 |
| | | FR 2944021 A1 | 08 October 2010 |
| | | FR 2944021 B1 | 08 October 2010 |
| | | JP 2012-522859 A | 27 September 2012 |
| | | JP 5631970 B2 | 26 November 2014 |
| | | US 10035876 B2 | 31 July 2018 |
| | | US 2015-0183926 A1 | 02 July 2015 |
| | | US 8987343 B2 | 24 March 2015 |
| | | WO 2010-112602 A1 | 07 October 2010 |
| WO 2016-173640 A1 | 03 November 2016 | CA 2983473 A1 | 03 November 2016 |
| | | CN 107531891 A | 02 January 2018 |
| | | EP 3289001 A1 | 07 March 2018 |
| | | JP 2018-514623 A | 07 June 2018 |
| | | US 2018-0171072 A1 | 21 June 2018 |
| WO 2022-235112 A1 | 10 November 2022 | CN 117242113 A | 15 December 2023 |
| | | EP 4317244 A1 | 07 February 2024 |
| | | JP 2024-518054 A | 24 April 2024 |
| | | KR 10-2022-0151568 A | 15 November 2022 |
| | | US 2024-0084070 A1 | 14 March 2024 |
| KR 10-2023-0020930 A | 13 February 2023 | None | |
| KR 10-2021-0038251 A | 07 April 2021 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230055420
- KR 1020240055649